# EUROPEAN PATENT SPECIFICATION

(11) **EP 0 380 250 B1**
(45) Date of publication and mention of the grant of the patent: **04.05.1994**
(21) Application number: 90300589.0
(22) Date of filing: 19.01.1990
(51) Int. Cl.: B29C 57/12, B29C 67/00, B29C 69/00, B26F 1/40, B29L 22/00

(54) **Improvements in or relating to thermoformed articles**
Tiefgezogene Artikel
Articles thermoformés

(30) Priority: 25.01.1989 GB 8901563
(43) Date of publication of application: 01.08.1990
(73) Proprietor: ANSON PACKAGING LTD., Haddenham, Ely, Cambridgeshire CB6 3XD (GB)
(72) Inventor: Dickens, John, Ely, Cambridgeshire CB6 3DP (GB); Dockerty, James Nelson, Wisbech, Cambridgeshire PE14 9 (GB)
(74) Representative: Maguire, Peter Albert

(56) References cited:
- WO-A-87/04406
- DE-A- 2 147 230
- DE-A- 2 643 489
- FR-A- 2 087 299
- FR-A- 2 139 764
- US-A- 3 357 053

## Description

The invention relates to thermoformed articles and more particularly, but not exclusively, to disposable thermoformed plastics trays of the kind used in the packaging and display of foodstuffs.

Normally such thermoformed trays are made in successive thermoforming operations on a sheet or strip of plastics material, typically transparent polyvinylchloride, after which the trays are separated from the plastics sheet or strip by means of a cutter which may include a blade acting against an anvil or may comprise a punch and die set. This operation of cutting the thermoformed articles from the plastics sheet or strip tends to leave the articles with a sharp marginal edge which can be undesirable for a number of uses and for example the edges can be sharp enough to cause minor injury and can be sharp enough to puncture plastics film which is often placed over such trays to protect their contents.

It is known to provide the marginal edges of thermoformed plastics containers with a rounded edge and for example this is done in the case of thermoformed plastics drinking cups in a rolling operation which is only applicable to cylindrical thermoformed articles. US-A-3357053 of W.B. LYON et al discloses apparatus for forming a thin-walled article or container with a rolled of curled lip in single operation. It is however also known to round-off the edges of thermoformed plastics trays, which are usually square or rectangular in shape and formed with a marginal flange, by means of an additional process which folds the cut edges under the top marginal flange of the tray. This is achieved with the aid of a forming machine with formers which can be advanced towards the marginal flange of the tray from all sides to engage the cut edges and fold them under the marginal flange. This process is time consuming and involves expensive machinery and accordingly is not used as widely as might otherwise be the case.

An object of the invention is to provide a simple process and means for finishing or rolling the edges of thermoformed articles such as disposable trays such that they do not present unacceptably sharp edges.

According to the invention there is provided a method of making an article from sheet material comprising the step of deforming the sheet to form the article with an outwardly extending marginal flange having a down-turned lip and cutting the article from the sheet to form a cut edge at the extremity of the downturned lip, characterised by the steps of forming the down-turned lip with an inwardly projecting continuous recess or depression extending lengthwise of the lip and having an upper edge and being terminated by the cut edge and squeezing together the flange and the cut edge permanently to deform the recess or depression and bring the cut edge and upper edge together. By this process the edge is shrouded by the folded or rounded corner so that the adverse effects of the edge are at least mitigated. The invention is particularly applicable to articles made by thermoforming plastics sheet but might also find application in articles made from metal sheet, such for example, as in the making of aluminium food containers. Where thermoplastic sheet material is concerned, it is preferred that the step of permanently deforming the recess or depression is carried out without additional heating of the thermoplastics sheet material.

The invention is diagrammatically illustrated by way of example in the accompanying drawings in which:-
Figure 1 is a cross-sectional side elevation of punch and die apparatus;
Figure 2 is an enlarged scrap view of part of Figure 1, and
Figure 3 is an enlarged scrap view corresponding to Figure 2 and showing the punch and die in a different position.

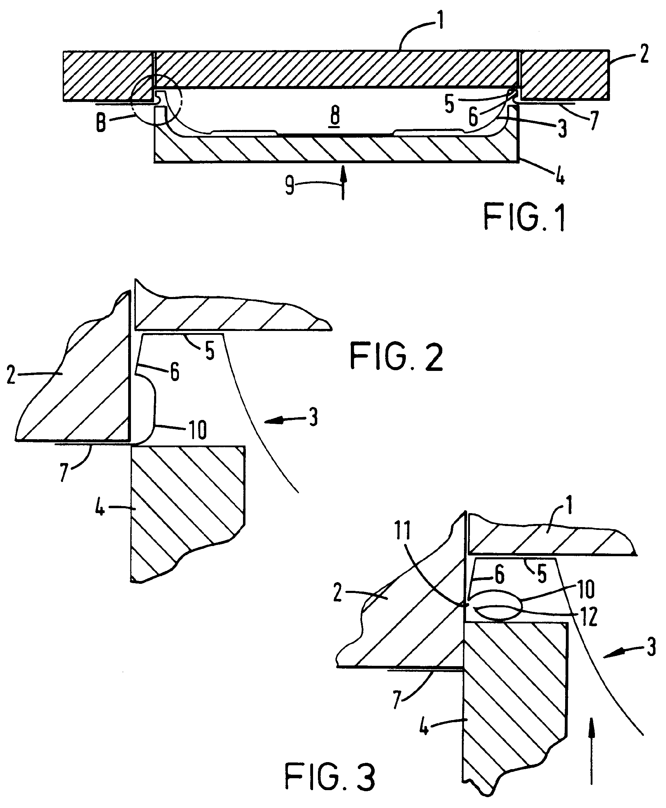

Referring to the drawings there is shown a thermoformed plastics tray 3, of the kind intended for the packaging and display of foodstuffs, which is generally rectangular in shape and which is formed about its periphery with an outwardly extending marginal flange 5 having a down- turned lip 6. As shown in Figures 1 and 2 of the drawings the thermoformed tray 3 is still attached to a flat strip or sheet 7 of plastics material from which the tray was formed and the tray 3 is arranged in the cavity 8 of a punch and die set 4 and 2 respectively which is to be used to cut the tray 3 from the sheet 7. To carry out the cutting operation the punch 4 is moved in the direction of the arrow 9 of Figure 1 so that the cutting edges of the punch and die engage the junction of the lip 6 with the sheet 7 whereupon further movement of the punch causes the tray to be severed from the sheet.

In accordance with the invention the lip 6 of the tray is formed with an undercut portion 10 which takes the form of a concavity, that is to say an inwardly projecting continuous recess or depression, extending lengthwise of the lip 6, and which has an upper edge 11. When the punch 4 is moved to shear the tray 3 from the sheet 7 the recess or depression is terminated by a cut-edge 12. It is arranged that the punch continues to move after shearing has taken place to crimp the undercut portion 10 against the marginal flange 5 as shown in Figure 3 of the drawings so that the down-turned lip 6 is terminated by a folded or rolled corner which tends to shroud the cut or sheared edge 12 of the tray. Thus the flange 5 and the cut edge 12 are squeezed together between the punch 4 and an anvil 1 so as permanently to deform or crimp the recess or depression 10 and bring the cut edge 12 into the vicinity of the upper edge 11 of the recess or depression 10. If desired the top edge of the punch may be profiled to tend to force the cut edge 12 inwardly and away from the folded or rolled corner 11. The die 2 is provided with an ejector to remove the tray 3 after cutting and crimping and the ejector is formed by the anvil 1 against which the punch 4 crimps the marginal flange.

It will be appreciated that the invention could be carried out in other ways and with articles other than trays. Thus the cutting of the article from the sheet could be achieved with the aid of a so-called steel rule blade which acts against a cutting shoe or anvil 16.

The invention thus provides a simple and effective method and means for finishing the cut edges of trays or other articles formed from sheet material, particularly articles thermoformed from plastics material, to avoid or mitigate against the sharp edges exhibited by such articles produced by conventional means. It is conceivable that the method of the invention could be used with sheet materials other than thermoplastics, e.g. thin aluminium and steel sheet.

## Claims

1. A method of making an article from sheet material (7) comprising the step of deforming the sheet to form the article (3) with an outwardly extending marginal flange (5) having a down-turned lip (6), and cutting the article from the sheet to form a cut edge (12) at the extremity of the down-turned lip, characterised by the steps of forming the down-turned lip (6) with an inwardly projecting continuous recess or depression (10) extending lengthwise of the lip (6) and having an upper edge (11) and being terminated by the cut edge (12), and squeezing together the flange (5) and the cut edge (12) permanently to deform the recess or depression (10) and bring the cut edge (12) and upper edge (11) together.

2. A method according to claim 1, wherein the sheet material (7) is thermoplastic and comprising the step of thermoforming the article (3) in the sheet, characterised in that the step of permanently deforming the recess or depression (10) is carried out without additional heating of the thermoplastics sheet material (7).

## Patentansprüche

1. Verfahren zur Herstellung eines Gegenstandes aus Blattmaterial (7), wobei in einem Schritt das Blech so verformt wird, daß es die Form des Gegenstandes (3) mit einem nach außen ragenden Randflansch (5), versehen mit einem nach unten gerichteten Vorsprung (6), annimmt, und der Artikel vom Blatt abgeschnitten wird, so daß eine Schneidkante (12) am Ende des nach unten gerichteten Vorsprungs entsteht, gekennzeichnet durch die Schritte zur Formung des nach unten gerichteten Vorsprungs (6), der mit einer nach innen gerichteten durchgehenden Ausbuchtung oder Vertiefung (10) längs des Vorsprungs (6) und mit einem oberen Rand (11) versehen ist und durch die Schneidkante (12) abgeschlossen wird, und zum Zusammendrücken des Flanschs (5) und der Schneidkante (12), so daß die Ausbuchtung oder Vertiefung (10) dauerhaft verformt wird und die Schneidkante (12) und der obere Rand (11) zusammengebracht werden.

2. Verfahren nach Anspruch 1, wobei das Blattmaterial (7) thermoplastisch ist und den Schritt der Wärmeformung des Gegenstandes (3) in dem Blatt umfaßt, gekennzeichnet dadurch, daß der Schritt der dauerhaften Verformung der Ausbuchtung oder Vertiefung (10) ohne zusätzliches Erhitzen des thermoplastischen Blattmaterials (7) erfolgt.

## Revendications

1. Procédé pour fabriquer un article à partir d'une feuille de matière (7), consistant à déformer la feuille pour former l'article (3) en lui donnant une bordure (5) qui s'étend vers l'extérieur et qui présente une lèvre (6) retournée vers le bas, à découper l'article en le séparant de la feuille et en réalisant un bord découpé (12) à l'extrémité de la lèvre retournée vers le bas, caractérisé en ce qu'on forme la lèvre (6) retournée vers le bas en y ménageant une dépression ou cavité (10) continue et en saillie vers l'intérieur, qui s'étend dans le sens de la longueur de la lèvre (6) et qui présente un bord supérieur (11) et se termine par le bord découpé (12), et en ce qu'on écrase l'une sur l'autre la bordure (5) et le bord découpé (12) de manière permanente afin de déformer la cavité ou dépression (10) en amenant l'un contre l'autre le bord découpé (12) et le bord supérieur (11).

2. Procédé selon la revendication 1, dans lequel on opère avec une feuille (7) en matière thermoplastique en réalisant l'article (3) dans la feuille par thermoformage, caractérisé en ce qu'on effectue la déformation permanente de la cavité ou dépression (10) sans chauffage additionnel de la feuille de matière thermoplastique (7).
